# EUROPÄISCHE PATENTSCHRIFT

(11) **EP 0 246 480 B1**
(45) Veröffentlichungstag und Bekanntmachung des Hinweises auf die Patenterteilung: **28.07.1993**
(21) Anmeldenummer: 87106400.2
(22) Anmeldetag: 04.05.1987
(51) Int. Cl.: H04Q 1/38, H04L 5/14

(54) **Schaltungsanordnung in Fernsprechvermittlungsanlagen zur Auswertung von Binärzeichen, deren Binärwerte jeweils durch festgelegte sich voneinander unterscheidende Stromwerte gebildet werden**
Circuit in telephone exchanges for the evaluation of binary signs of which the binary values are created by fixed current values different from each other
Circuit dans des centraux téléphoniques pour l'évaluation de signes binaires, dont la valeur binaire est formée par des valeurs de courant fixées qui sont différentes l'une de l'autre

(30) Priorität: 15.05.1986 DE 3616345
(43) Veröffentlichungstag der Anmeldung: 25.11.1987
(73) Patentinhaber: SIEMENS AKTIENGESELLSCHAFT, 80333 München (DE)
(72) Erfinder: Sundermann, Helmut, Dipl.-Ing., D-4425 Billerbeck (DE)

(56) Entgegenhaltungen:
- EP-A- 0 032 741
- GB-A- 2 130 457
- US-A- 3 886 315

## Beschreibung

Die Erfindung betrifft eine Schaltungsanordnung zur Auswertung von zwischen einer Sendeeinheit und einer Empfangseinheit übertragenen Binärzeichen, insbesondere von zwischen einer zentralen Einrichtung und einer von mehreren Endgeräten in einer Fernsprechvermittlungsanlage übertragenen Binärzeichen, deren Binärwerte jeweils durch festgelegte, sich voneinander unterscheidende Stromwerte gebildet werden, wobei abhängig von der Art des jeweiligen Endgerätes für die Darstellung ein und desselben Binärwertes unterschiedliche Stromwerte zugrundegelegt werden.

Bei kleinen Nebenstellenanlagen, an die die jeweiligen Endeinrichtungen über ein Sprechadernpaar und ein Signalisierungsadernpaar an die Anlage angeschlossen sind, ist es beispielsweise bekannt, über die Signaladern eine wechselseitige Informationsübertragung durchzuführen. Es können dabei die Informationen in der einen Richtung durch eine binäre Spannungsmodulation und die in der anderen Richtung durch eine binäre Strommodulation übertragen werden. Mit letzterer wird z. B. die an der Endeinrichtung vorgenommene Betätigung einzelner Tasten signalisiert. Zu den Endeinrichtungen können Einstellinformationen für die an ihnen angebrachten optischen Anzeigeelemente übertragen werden. Dies kann durch die binäre Spannungsmodulation erfolgen, wobei die Binärwerte der z. B. jeweils in einem Datenblock zusammenzufassenden gesamten Information für eine Endeinrichtung durch den Spannungsruhewert der Signalleitung bzw. durch eine Spannungsabsenkung gebildet werden. Bei der in der Gegenrichtung vorgenommenen binären Strommodulation kann die Darstellung der Binärwerte durch einen vorgegebenen Wert des Signalleitungsstromes bzw. durch eine bestimmte Absenkung dieses Stromes erfolgen. Es können nun als Sendeeinheiten ihrer Art nach unterschiedliche Endgeräte angeschaltet sein, die sich auch in ihrer mittleren Stromaufnahme unterscheiden. Bei der vorgenommenen Strommodulation sind also - abhängig von der Art des jeweiligen Endgerätes - ein und demselben Binärwert, insbesondere bei gleicher Stromwertänderung zur Bildung des jeweils anderen Binärwertes, unterschiedliche Stromwerte zugeordnet.

Es ist nun die Aufgabe der Erfindung, eine Empfangsschaltung anzugeben, mit der - unabhängig von der vorgegebenen Stromaufnahme der anzuschaltenden Sendeeinheit - mit einfachsten Mitteln eine sichere Decodierung möglich ist.

Dies wird dadurch erreicht, daß in der Empfangseinheit zur von der Wahl der Stromwerte unabhängigen Auswertung der Binärzeichen ein Spannungskomparator vorgesehen ist, daß dessen einer Eingang mit der vom oberen Stromwert abgeleiteten und ihm zumindest angenähert entsprechenden Spannung und daß dessen anderer Eingang mit der den augenblicklichen Stromwert entsprechenden Spannung beaufschlagt wird, so daß jede Änderung im Binärwert eine entsprechende Änderung des einer Auswerteeinheit zugeführten Ausgangssignals des Spannungskomparators zur Folge hat.

Die an dem einen Eingang jeweils anliegende Vorspannung und damit der Arbeitspunkt der Schaltung paßt sich also der jeweiligen Stromaufnahme des angeschalteten Endgerätes an. Unabhängig von der mittleren Stromaufnahme wird diese Vorspannung bei einer Stromabsenkung durch die Spannung am anderen Eingang unterschritten. Dies führt zu einem entsprechenden Signal am Ausgang des Komparators, wodurch eine sichere Auswertung des codierten Stromes erfolgen kann.

Gemäß einer Weiterbildung der Erfindung fallen die den einzelnen Stromwerten der Binärzeichen entsprechenden Spannungswerte an einem Meßwiderstand ab, und diese Spannung wird beiden Eingängen des Spannungskomparators zugeführt. An dem einen Eingang wird - entkoppelt durch eine Diode - zusätzlich ein Spannungsspeicherglied angeschaltet. Dieses Spannungsspeicherglied kann durch einen Ladekondensator mit einem parallel geschalteten ohmschen Widerstand realisiert sein. Durch die RC-Kombination wird eine damit aufsummierte gebildete Gleichspannung als eine von der mittleren Stromaufnahme der Endeinrichtung abhängige Vorspannung für den betreffenden Komparatoreingang erzeugt.

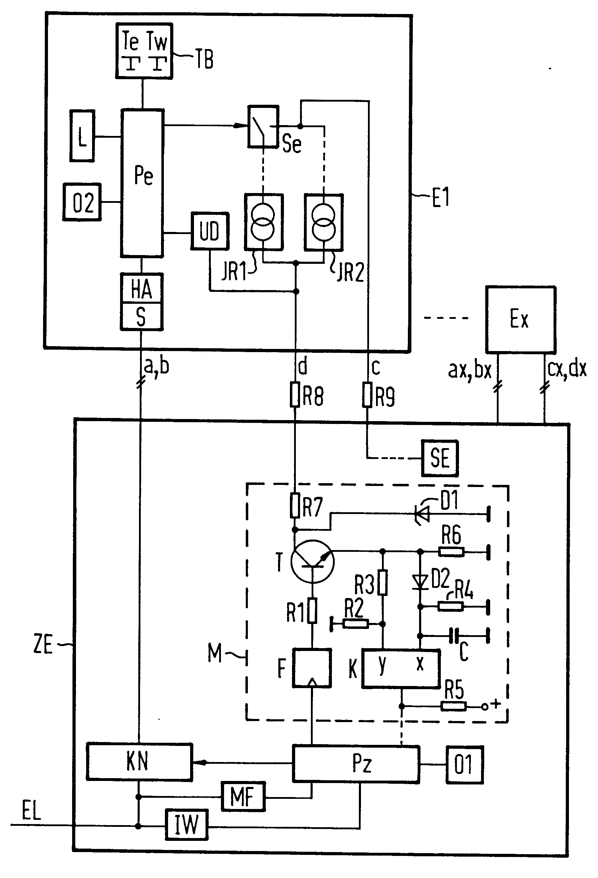

Das Ausführungsbeispiel nach der Figur zeigt in einem modifizierten Blockschaltbild die Grundstruktur einer kleinen Fernsprechnebenstellenanlage. An diese sind die einzelnen Endeinrichtungen E1 bis Ex, die beispielsweise Fernsprechendgeräte darstellen, sternförmig über eine jeweils vieradrige Anschlußleitung mit der Anlage ZE verbunden. Jede Teilnehmeranschlußleitung besteht aus einem Sprechadernpaar a/b und einem Signalisierungsadernpaar c/d, über das die Speisung der jeweiligen Endgeräte E1 bis Ex sowie eine wechselseitige Signalisierung stattfindet. Über das jeweilige Sprechadernpaar werden die Sprachinformationen und der Rufstrom übertragen. Mit Ausnahme des zur Endeinrichtung E1 führenden Signalsierungsadernpaar sind die übrigen Adernpaare nur als einadrige Verbindung dargestellt. In jeder Fernsprechendeinrichtung E ist mit den Sprechadern die Sprechschaltung S verbunden. Sie dient in Zusammenhang mit dem Handapparat HA der Verarbeitung der übertragenen Sprachinformationen und bildet einen Leitungsabschluß. Zwischen den einzelnen Sprachendgeräten sind bei entsprechender Einstellung des Koppelnetzes KN vermittels der in der Anlage vorhandenen Steuereinheit Pz interne Verbindungen herstellbar. Weiterhin besteht die Möglichkeit, sich auf eine von mehreren externen Leitungen EL aufzuschalten. In der Fernsprechendeinrichtung E1 ist durch den Tastwahlblock TB, der in jeder Einrichtung mit der in ihr enthaltenen Steuereinheit Pe gekoppelt ist, die Möglichkeit angedeutet, durch die Tastenbetätigung das Aussenden bestimmter Informationen zu veranlassen. Durch die Taste Tw wird das Vorhandensein einer normalen Wahltastatur symbolisiert. Die Taste Te steht für eine Reihe von Tasten, durch die bestimmte Bedienungsprozeduren eingeleitet werden können. Ist der Aufbau einer externen Verbindung beabsichtigt, so wird die entsprechende Information über die Signalisierungsadern der Anlage ZE in gleicher Weise wie die jeweils nachfolgende Betätigung der zur Wahltastatur gehörenden Tasten der Anlage ZE übermittelt. Durch die Steuereinheit Pz der Anlage ZE wird daraufhin die Ausgabe der entsprechenden Wahlinformationen veranlaßt. Dies kann auf der hierzu ausgewählten externen Leitung EL durch eine normale Wahlimpulsabgabe in Form von Schleifenunterbrechungen mit Hilfe der Einheit IW erfolgen. Mittels der Einheit MF besteht die Möglichkeit, die Wahlinformationen in bekannter Weise in einem Mehrfrequenz-Code abzugeben.

Es findet - wie bereits erwähnt - zwischen den einzelnen Endgeräten E1 bis Ex und der Anlage ZE eine wechselseitige Informationsübertragung statt. Die Übertragung von der Anlage ZE zu den einzelnen Endeinrichtungen kann beispielsweise durch eine binäre Spannungsmodulation vorgenommen werden, wobei dann auf diese Weise in erster Linie Einstellinformationen für optische Anzeigeelemente, die im Ausführungsbeispiel für die Endeinrichtung E1 durch den Block L angedeutet sind, übertragen werden. Durch diese optischen Anzeigeelemente, z. B. in Form von Leuchtdioden, wird u. a. der Zustand der vorhandenen externen Leitungen und der internen Leitungen angezeigt.

Die durch eine Spannungsmodulation bzw. durch eine Strommodulation in der dazu entgegengesetzter Richtung vorgenommenen wechselseitige Signalisierung, bei der die Informationen entweder blockweise von der Anlage ZE zum jeweiligen Fernsprechendgerät und anschließend in der dazu umgekehrten Richtung gesendet werden oder bei der eine byteweise Verschachtelung der wechselseitig den beiden Richtung zuzuordnenden Informationsbits innerhalb eines Datenblockes vorgenommen wird, erfordert eine genaue zeitliche Abstimmung der jeweiligen Sendezeitpunkte in den maßgebenden Einrichtungen. Hierzu muß der Takt, der in der Endeinrichtung, z. B. Endeinrichtung E1, der Aussendung der Informationsbits zugrundegelegt wird, mit dem Takt der in der Anlage ZE die Aussendung der Informationsbits festlegt, übereinstimmen. Es ist also eine Synchronisation, z. B. der Endeinrichtung E1, erforderlich. Im Ausführungsbeispiel werden die für die Steuereinheit Pz in der Anlage ZE erforderlichen Taktfolgen von der Oszillatoranordnung 01 und für die Endeinrichtung E1 von der Oszillatoranordnung 02 abgeleitet. Für die Steuereinheit Pe des Fernsprechendgerätes erfolgt eine Synchronisation über den Interrupteingang. Für die übrigen Endeinrichtungen gilt dann entsprechendes.

Über die Signalisierungsleitungen werden jeweils die mit dieser Leitung in den einzelnen Fernsprechendgeräten gekoppelten Einheiten mit der notwendigen Versorgungsspannung beaufschlagt. Um dies anzudeuten, ist in der Anlage ZE die Einheit SE dargestellt, die z. B. einen von der Netzspannung gespeisten Stromwandler darstellen kann. Dieser liefert die insgesamt notwendigen Versorgungsspannungen. In der Figur ist lediglich die Anschaltung an die Signalisierungsader angedeutet.

Um die wechselseitige Signalisierung zu ermöglichen, ist in der Anlage ZE eine Sende-/Empfangsschaltung M vorhanden. Die der Endeinrichtung zu übermittelnde Information wird als Bitmuster durch die Steuereinheit Pz vorgegeben. Damit wird über das Flip-Flop F und den Widerstand R1 der Transistor T angesteuert. Ist dieser Transistor leitend, wird eine Absenkung der Spannung vorgenommen. Ihr Wert bestimmt sich aus der Kollektor-Emitterrestspannung des Transistors T und dem kleinen Spannungsabfall am Widerstand R6. Wird der Transistor T durch entsprechende Ansteuerimpulse gesperrt, so fließt der Strom durch die Zenerdiode D1, wodurch die Spannung auf einen bestimmten Wert gehalten wird. Die beiden unterschiedlichen Spannungspegelwerte werden ohne Auswirkung der von der Art des Endgerätes abhängigen mittleren Stromaufnahme durch die mit der Steuereinheit Pe in Verbindung stehenden Einheit UD durch Auswertung der auftretenden Spannungsänderungen decodiert. Mit dieser Einheit sind somit die durch eine Spannungsabsenkung bzw. durch den Spannungsruhewert der Signalleitung definierten Informationsbits feststellbar.

Auf den zu jeder Fernsprechendeinrichtung E führenden Signaladern c und d, deren Leitungswiderstände bezogen auf die Endeinrichtung E1 mit R9 und R8 dargestellt sind, findet zur Übermittlung von insbesondere Tastenbetätigungen betreffenden Informationen an die Anlage ZE eine binäre Strommodulation statt. Eine Betätigung der dem Tastenblock TB zugehörigen Taste wird zunächst von der Steuereinheit Pe registriert und führt dann zu einer entsprechend codierten Information, bei der der eine Binärwert beispielsweise durch den aufgenommenen Ruhestromwert und der jeweils andere Binärwert durch eine von diesem Ruhestromwert ausgehende bestimmte Stromabsenkung dargestellt wird. Die Stromaufnahme der in einer jeden Fernsprechendeinrichtung E vorhandenen Einheiten wird grundsätzlich durch die beiden Stromreglereinheiten IR1 und IR2 bestimmt. Der Stromruhewert aus der Signalleitung ergibt sich, wenn beide Reglereinheiten aktiviert sind. In einem solchen Fall ist also der symbolisch dargestellte Schalter Se, der von der Steuereinheit Pe betätigt wird, geschlossen. Wird der Schalter Se, der entgegen der gewählten Darstellung als elektronischer Schalter realisiert wird, in den geöffneten Zustand gesteuert, so ist die Konstantstromquelle IR1 abgeschaltet. Mit dieser Stromabsenkung ist somit der eine Binärwert darstellbar. Aufgrund der Stromwertveränderung vom Ruhestromwert auf den abgesenkten Stromwert kann eine Codeübertragung durchgeführt werden.

Die vermittels der geschilderten Strommodulation übermittelten Informationen werden in einer Empfangseinheit, die als Teil des Modems M für jede Fernsprechendeinrichtung vorhanden ist, decodiert. Diese Decodierung muß auch gewährleistet sein, wenn Fernsprechendgeräte mit unterschiedlicher Ruhestromaufnahme an die Fernsprechnebenstellenanlage angeschaltet werden. Abhängig von der Art der jeweiligen Endeinrichtung werden dann nämlich die beiden Binärwerte Log 0 bzw. Log 1 jeweils durch unterschiedliche Stromwerte dargestellt. Es werden unterschiedliche Fernsprechendeinrichtungen eingesetzt, wobei der Energiebedarf der einen Endeinrichtung durch einen mittleren Ruhestrom von beispielsweise 45 mA und der der anderen Endeinrichtung durch einen mittleren Ruhestrom von 30 mA abgedeckt ist. Durch diese genannten Stromwerte wird also z. B. die binäre Information "Log 0" dargestellt. Setzt man nun eine gleiche Stromwertänderung von z. B. 15 mA für die Bildung des jeweils anderen Binärwertes "Log 1" voraus, so wäre diesem Binärwert ein Stromwert von 30 mA bzw. von 15 mA zugeordnet. Durch die Empfangsschaltung muß nun - unabhängig von der mittleren Strombelastung -die Stromabsenkung von 15 mA beim Betrieb der beiden Fernsprechendeinrichtungen erkannt werden.

Während des Zeitbereiches, in dem Informationen durch die genannte Strommodulation übertragen werden, wird der Transistor T durchgesteuert und es fällt am Widerstand R6, der als Meßwiderstand dient, eine entsprechende Spannung ab. Diese wird über den aus den Widerständen R2 und R3 gebildeten Spannungsteiler dem einen Eingang eines Spannungskomparators K zugeführt. Durch die Auswahl der Spannungsteilerwiderstände kann der Arbeitsbereich des Komparators bestimmt werden. Es sind damit die Grenzen, in denen eine Stromwertänderung erfaßbar wird, festzulegen. Gleichzeitig wird über eine Entkopplungsdiode D2 die am Meßwiderstand R6 entstehende Spannung auf den anderen x-Eingang dieses Komparators geführt. An diesem Eingang ist ein aus dem Kondensator C und dem Widerstand R bestehendes Spannungsspeicherglied angeschaltet. Durch diese Kondensator-Widerstandskombination wird der Wert der hier aufsummierten gemittelten Gleichspannung bestimmt. An dem Eingang x entsteht somit vermittels des Speichergliedes eine Vorspannung, die von dem oberen, d. h. dem mittleren Ruhestromwert, auf der Signalleitung abgeleitet ist und ihn angenähert als Spannungswert abbildet. In Abhängigkeit von dem jeweils oberen Stromwert, der der maximalen mittleren Stromaufnahme der jeweiligen Fernsprechendeinrichtung entspricht, entsteht also am x-Eingang eine variable Vorspannung, womit verschiedene Strombereiche ausgewertet werden können. Der Arbeitspunkt der in der geschilderten Weise gebildeten Empfangsschaltung paßt sich also dem für den Energiebedarf der Endeinrichtung notwendigen oberen Stromwert an. Am y-Eingang des Komparators steht diejenige Spannung, die dem augenblicklichen Stromwert, also in Abhängigkeit vom jeweiligen Binärwert dem oberen bzw. dem unteren Stromwert entspricht. Es wird in jedem Fall bei einer Stromabsenkung von beispielsweise 15 mA zur Bildung des den einen Binärwert zugehörigen unteren Stromwertes jeweils die am x-Eingang anstehende Vorspannung unterschritten. Damit wird der Ausgang des Komparators umgeschaltet, so daß damit eine Decodierung der Strominformation ermöglicht wird. Der Ausgang des Komparators kann in nicht dargestellter Weise zu einem Bustreiber für einen Systembus führen, wobei dann zur Registrierung der einzelnen Binärwerte der Systembus durch die Steuereinheit Pz gescannt wird. Es kann also bei geeigneter Dimensionierung der Elemente dieser Empfangsschaltung beim Betreiben von Fernsprechendeinrichtungen mit unterschiedlicher Stromaufnahme in jedem Fall die zur Bildung eines Binärwertes vorgenommene Stromabsenkung festgestellt werden. Der mit dem Kollektor und der einen Signalader verbundene Widerstand R7 dient als Schutzwiderstand und über den Widerstand R5 erfolgt - wie in der Figur angedeutet - die Spannungsversorgung des Komparators.

### Bezugszeichenliste

- a, b: Sprechadernpaar
- c, d: Signalisierungsadernpaar
- C: Kondensator
- D1, D2: Diode
- E1...Ex: Endgerät
- EL: externe Leitung
- Jw: Einheit zur Abgabe der Schleifenimpulse
- JR1, JR2: Konstantstrangquelle
- F: Flip-Flop
- HA: Handapparat
- KN: Koppelnetz
- K: Spannungskomparator
- L: optische Anzeigeeinheit
- M: Sende-/Empfangseinheit
- MF: Einheit zur Abgabe von MFC-Zeichen
- 01, 02: Oszillator
- Pz, Pe: Steureinheit
- R1...R9: Widerstand
- S: Sprechschaltung
- SE: Versorgungsspannungseinheit/
- Se: Schalter
- T: Transistor
- TB: Tastwahlblock
- Tw, Te: Taste
- UD: Auswerteeinheit
- ZE: Vermittlungsanlage
- x, y: Eingang

## Patentansprüche

1. Schaltungsanordnung zur Auswertung von zwischen einer Sendeeinheit und einer Empfangseinheit übertragenen Binärzeichen, insbesondere von zwischen einer zentralen Einrichtung und einer von mehreren Endgeräten in einer Fernsprechvermittlungsanlage übertragenen Binärzeichen, deren Binärwerte jeweils durch festgelegte, sich voneinander unterscheidende Stromwerte gebildet werden, wobei - abhängig von der Art des jeweiligen Endgerätes - für die Darstellung ein und desselben Binärwertes unterschiedliche Stromwerte zugrundegelegt werden, **dadurch gekennzeichnet,** daß in der Empfangseinheit (M) zur von der Wahl der Stromwerte unabhängigen Auswertung der Binärzeichen ein Spannungskomparator (K) vorgesehen ist, daß dessen einer Eingang (x) mit der vom oberen Stromwert abgeleiteten und ihn zumindest angenähert entsprechenden Spannung und daß dessen anderer Eingang (y) mit der den augenblicklichen Stromwert entsprechenden Spannung beaufschlagt wird, so daß jede Änderung im Binärwert eine entsprechende Änderung des einer Auswerteeinheit zugeführten Ausgangssignals des Spannungskomparators zur Folge hat.

2. Schaltungsanordnung nach Anspruch 1, **dadurch gekennzeichnet,** daß die den einzelnen Stromwerten der Binärzeichen entsprechenden Spannungswerte an einem Meßwiderstand (R6) abfallen und daß dieser Spannungsabfall beiden Eingängen (x,y) des Spannungskomparators (K) zugeführt wird, daß an dem einen Eingang (x), entkoppelt durch eine Diode (D2), zusätzlich ein Spannungsspeicherglied (C,R4) angeschaltet ist.

3. Schaltungsanordnung nach Anspruch 2, **dadurch gekennzeichnet,** daß das Spannungsspeicherglied einen Ladekondensator (C) mit einem parallel geschalteten ohmschen Widerstand (R4) darstellt.

4. Schaltungsanordnung nach Anspruch 2, **dadurch gekennzeichnet,** daß der Meßwiderstand (R6) in der Hauptstromstrecke eines im Sendefall aufsteuerbaren Halbleiterschalters (T) angeordnet ist.

5. Schaltungsanordnung nach Anspruch 1, **dadurch gekennzeichnet,** daß der obere Stromwert angenähert der mittleren Stromaufnahme des jeweiligen Endgerätes (E1...Ex) entspricht und der untere Stromwert jeweils durch eine vorgegebene Stromwertverminderung bestimmt ist.

## Claims

1. Circuit arrangement for evaluating binary signals transmitted between a transmitting unit and a receiving unit, especially binary signals transmitted between a central device and one of a number of terminals in a telephone switching system, the binary values of which signals are in each case formed by fixed current values differing from one another, different current values being used as a basis for representing one and the same binary value depending on the type of respective terminal, characterised in that a voltage comparator (K) is provided in the receiving unit (M) for evaluating the binary signals independently of the choice of current values, in that the voltage derived from the upper current value and at least approximately corresponding to this value is applied to one input (x) of this comparator and in that the voltage corresponding to the instantaneous current value is applied to its other input (y) so that each change in the binary value results in a corresponding change of the output signal of the voltage comparator which is supplied to an evaluating unit.

2. Circuit arrangement according to Claim 1, characterised in that the voltage values corresponding to the individual current values of the binary signals are dropped across a sensing resistor (R6) and in that this voltage drop is supplied to both inputs (x, y) of the voltage comparator (K), and that, in addition, a voltage storage section (C, R4), decoupled by a diode (D2) is connected to one input (x).

3. Circuit arrangement according to Claim 2, characterised in that the voltage storage section represents a charging capacitor (C) with a parallel-connected ohmic resistor (R4).

4. Circuit arrangement according to Claim 2, characterised in that the sensing resistor (R6) is arranged in the main current path of a semiconductor switch (T) which can be turned on in the transmitting case.

5. Circuit arrangement according to Claim 1, characterised in that the upper current value approximately corresponds to the average current consumption of the respective terminal (E1...Ex) and the lower current value is in each case determined by a predetermined reduction in current value.

## Revendications

1. Montage pour évaluer des signaux binaires transmis entre une unité d'émission et une unité de réception, notamment de signaux binaires transmis entre un dispositif central et l'un de plusieurs terminaux dans une installation de commutation téléphonique et dont les valeurs binaires sont formées respectivement par des valeurs de courant fixées, qui sont différentes, et dans lequel - indépendamment du type du terminal respectif - des valeurs de courant différentes sont prises pour base de la représentation d'une même valeur binaire, caractérisé par le fait que dans l'unité de réception (M), pour l'évaluation des signaux binaires, indépendamment du choix des valeurs de courant, il est prévu un comparateur de tension (K), qu'une entrée (x) de ce comparateur est alimentée par la tension qui est dérivée de la valeur de courant supérieure et correspond au moins approximativement à cette valeur, et que l'autre entrée (y) du comparateur est alimentée par la tension correspondant à la valeur de courant instantanée, de sorte que toute modification de la valeur binaire entraîne une modification correspondante du signal de sortie, envoyé à une unité d'évaluation, du comparateur de tension.

2. Montage suivant la revendication 1, caractérisé par le fait que les valeurs de tension, qui correspondent aux valeurs individuelles de courant des signaux binaires, chutent dans une résistance de mesure (R6), et que cette chute de tension est envoyée aux deux entrées (x,y) du comparateur de tension (K), et qu'en outre un circuit d'accumulation de tension (C, R4) est raccordé à une entrée (x) du comparateur, moyennant un décomptage réalisé par une diode (D2).

3. Montage suivant la revendication 2, caractérisé par le fait que le circuit accumulateur de tension représente un condensateur de charge (C) en parallèle avec lequel est branchée une résistance ohmique (R4).

4. Montage suivant la revendication 2, caractérisé par le fait que la résistance de mesure (R6) est disposée dans la voie de courant principale d'un interrupteur à semiconducteurs (T) commandable dans le cas de l'émission.

5. Montage suivant la revendication 1, caractérisé par le fait que la valeur supérieure de courant correspond approximativement à l'absorption moyenne de courant du terminal respectif (E1...Ex) et que la valeur de courant inférieure est déterminée respectivement par une réduction prédéterminée de la valeur de courant.
